# EUROPÄISCHE PATENTSCHRIFT

(11) **EP 3 365 574 B1**
(45) Veröffentlichungstag und Bekanntmachung des Hinweises auf die Patenterteilung: **27.11.2019**
(21) Anmeldenummer: 16770764.5
(22) Anmeldetag: 26.09.2016
(51) Int. Cl.: F16C 41/00, F16C 11/06, F16C 17/24

(54) **KUGELGELENK MIT VERSCHLEISSMESSEINRICHTUNG**
BALL JOINT WITH WEAR MEASURING DEVICE
JOINT SPHÉRIQUE AVEC DISPOSITIF DE MESURE DE L'USURE

(30) Priorität: 23.10.2015 DE 102015220755
(43) Veröffentlichungstag der Anmeldung: 29.08.2018
(73) Patentinhaber: ZF Friedrichshafen AG, 88046 Friedrichshafen (DE)
(72) Erfinder: STRATMANN, Julian, 49324 Melle (DE); KLANK, Michael, 49084 Osnabrück (DE)
(86) Internationale Anmeldenummer: PCT/EP2016/072782
(87) Internationale Veröffentlichungsnummer: WO 2017/067742

(56) Entgegenhaltungen:
- DE-A1-102008 041 050
- DE-A1-102010 052 885
- DE-B3-102005 027 826
- JP-A- S6 217 421

## Beschreibung

Die Erfindung betrifft ein Kugelgelenk, insbesondere für ein Fahrzeug, gemäß dem Oberbegriff des Patentanspruchs 1.

In der Fahrzeugtechnik werden Kugelgelenke unter anderem zur gelenkigen Verbindung von Fahrwerkskomponenten der Radaufhängung und/oder Lenkung verwendet, wo diese dazu dienen, Federbewegungen bzw. Lenkbewegungen zwischen den zumeist um mehrere Achsen beweglichen Bauteilen zu übertragen. Abhängig vom jeweiligen Einsatzfall treten dabei zwischen einem Gehäuse des Kugelgelenks und einem mittels einer Gelenkkugel schwenkbeweglich in dem Gehäuse gelagerten Kugelzapfen, der sich durch eine Öffnung des Gehäuses hinaus erstreckt, unterschiedliche Betriebskräfte auf.

Die während des Betriebs des Kugelgelenks stattfindenden Schwenkbewegungen verursachen Reibung zwischen einer Oberfläche der Gelenkkugel und der damit in Kontakt stehenden Oberfläche entweder des die Gelenkkugel aufnehmenden Gehäuses oder einer im Gehäuse angeordneten, die Gelenkkugel zur gleitbeweglichen Lagerung bereichsweise umgebenden Kugelschale. Mit zunehmender Betriebsdauer des Kugelgelenks führt die so verursachte Reibung zu Verschleiß. Mit fortschreitendem Verschleiß vergrößert sich das Spiel des Kugelgelenks, es verschlechtert sich somit die Genauigkeit, mit der die betroffenen Fahrwerkskomponenten gelenkig miteinander verbunden sind. Zur Gewährleistung der exakten Lenkung und Radführung und somit der Sicherheit des Fahrzeugs ist es notwendig, ein verschlissenes Kugelgelenk des Fahrwerks rechtzeitig auszutauschen. Im verbauten Zustand am Fahrzeug ist eine entsprechende Diagnose aufwendig, oft recht ungenau und meist nur durch einen Fachmann durchzuführen.

Der DE 10 2005 027 826 B3 ist ein Kugelgelenk mit einer Sensoreinrichtung zur Verschleißerkennung zu entnehmen. Hierbei ist zwischen Gelenkkugel und Gehäusedeckel eine biegeelastische Sensorplatine angeordnet, auf der sich die Sensoreinrichtung befindet. Die Sensoreinrichtung kann ein Feld eines Permanentmagneten erfassen, der in der Gelenkkugel angeordnet ist.

Aus der DE 10 2008 041 050 A1 ist ein Verfahren zur Messung des Verschleißes eines Kugelgelenks bekannt, das auf einer Magnetfeldmessung beruht. Dazu ist am Gehäuse des Kugelgelenks ein Magnetfeldsensor angeordnet, während im Kugelzapfen ein Permanentmagnet angeordnet ist. Durch Vergleichsmessung der Magnetfeldgröße zuerst ohne Krafteinwirkung, dann mit Krafteinwirkung auf den Kugelzapfen, wird der Verschleißzustand des Kugelgelenks bestimmt. Bei dem beschriebenen Verfahren können außenstehende Magnetfelder das Messergebnis beeinflussen.

JP S62 17421 A offenbart die Merkmale des Oberbegriffs von Anspruch 1.

Es ist eine Aufgabe der vorliegenden Erfindung ein Kugelgelenk gemäß der eingangs genannten Art anzugeben, dessen Verschleißzustand sich mit hoher Genauigkeit und weitestgehend unabhängig von äußeren Einflüssen bestimmen lässt.

Die genannte Aufgabe wird gelöst durch ein Kugelgelenk gemäß den Merkmalen des Patentanspruchs 1. Dabei handelt es sich um ein Kugelgelenk, insbesondere für ein Fahrzeug, umfassend ein Gehäuse und einen eine Gelenkkugel aufweisenden Kugelzapfen, der mittels der Gelenkkugel schwenkbeweglich in dem Gehäuse gelagert ist und sich durch eine Öffnung des Gehäuses hinaus erstreckt. Das Kugelgelenk zeichnet sich erfindungsgemäß aus durch eine Einrichtung, mittels derer sich eine Relativposition der Gelenkkugel gegenüber dem Gehäuse bestimmen lässt, um aus der Relativposition einen Verschleißzustand des Kugelgelenks abzuleiten.

Demzufolge wurde erkannt, dass sich ein Verschleißzustand des Gelenks vorteilhaft aus einer Relativposition der Gelenkkugel gegenüber dem Gehäuse ableiten lässt. Unter einer Relativposition sei in diesem Zusammenhang wenigstens eine Information zu verstehen, mit der sich die Lage der Gelenkkugel insbesondere in Bezug auf eine verschleißbedingt zu erwartende Bewegung beschreiben lässt. Diesem Ansatz liegt die Erkenntnis zugrunde, dass sich die Gelenkkugel des Kugelzapfens im Laufe der Lebensdauer des Kugelgelenks unter dem Einfluss von Krafteinwirkung, Reibung, Temperatur innerhalb des Gehäuses des Kugelgelenks zumindest geringfügig translatorisch bewegt, das heißt ihre relative Position gegenüber dem Gehäuse verändert. Bei einem verschlissenen Kugelgelenk kann der Kugelmittelpunkt der Gelenkkugel relativ zum Gehäuse des Kugelgelenks verschoben sein gegenüber dem Kugelmittelpunkt im ursprünglichen (nicht verschlissenen) Zustand.

Im Unterschied zu dem in DE 10 2008 041 050 A1 beschriebenen Verfahren, bei dem ein Vergleich der gemessenen Magnetfeldstärke stattfindet, beruht bei dem erfindungsgemäßen Kugelgelenk die Ableitung des Verschleißzustands auf der Beobachtung der Relativposition der Gelenkkugel gegenüber dem Gehäuse. Ein Einfluss äußerer Störgrößen, wie insbesondere äußerer Magnetfelder, ist dabei ausgeschlossen, so dass sich eine zuverlässigere Bestimmung des Verschleißzustands erzielen lässt.

Zweckmäßiger Weise ist in dem Gehäuse des Kugelgelenks eine die Gelenkkugel bereichsweise umgebende Kugelschale angeordnet, welche die Gelenkkugel gleitbeweglich lagert. Die Anordnung einer solchen Kugelschale ist eine für sich gesehen bekannte Maßnahme, um (unter anderem) auf eine aufwendige Bearbeitung der Gehäuseinnenfläche verzichten zu können und dennoch die Reibung und somit den Verschleiß innerhalb des Kugelgelenks gering zu halten. Üblicherweise ist die Kugelschale aus einem geeigneten Werkstoff wie vorzugsweise Kunststoff gefertigt, so dass die Lagerschale zumindest geringfügig nachgiebig ist.

Die an dem Kugelgelenk erfindungsgemäß vorgesehene Einrichtung, mittels derer sich eine Relativposition der Gelenkkugel gegenüber dem Gehäuse bestimmen lässt, umfasst wenigstens einen Abstandssensor zur Erfassung eines Abstands der Gelenkkugel gegenüber dem Gehäuse. Der Abstandssensor kann dabei auf unterschiedliche Weise gestaltet und angeordnet sein.

Hierbei ist der wenigstens eine Abstandssensor dazu ausgebildet, einen Abstand zwischen dem Gehäuse und einem dem Abstandssensor zugewandten Oberflächenabschnitt der Gelenkkugel zu erfassen. Der Abstand zwischen Gelenkkugel und Gehäuse wird demnach durch eine Abstandsmessung gegenüber einem dem Abstandssensor zugewandten Oberflächenabschnitt der Gelenkkugel gemessen. In Kenntnis der Geometrie des Oberflächenabschnitts kann aus dem gemessenen Abstand die Relativposition der Gelenkkugel ermittelt werden. Gemäß einer einfachen Ausgestaltung kann es sich bei dem Oberflächenabschnitt um einen Teil der Kugeloberfläche der Gelenkkugel handeln. Der mit dem Abstandssensor erfasste Abstand ist in diesem Fall unabhängig von einem Kippwinkel des Kugelzapfens gegenüber dem Gehäuse.

Der bei dem erfindungsgemäßen Kugelgelenk vorteilhaft zum Einsatz kommende Abstandssensor kann auf unterschiedliche Weise gestaltet sein. Zur Vermeidung externer Störeinflüsse, insbesondere durch externe Magnetfelder, handelt es sich bei dem Abstandssensor um einen auf Basis eines induktiven und/oder kapazitiven Messverfahrens arbeitenden Sensor. Da sich Kugelgelenke von Fahrzeugen oftmals in einem Einflussbereich externer magnetischer Felder (auch fahrzeugeigener Felder) befinden, bietet ein induktiv und/oder kapazitiv arbeitender Abstandssensor den Vorteil, dass dieser unempfindlich gegenüber diesen Magnetfeldern ist. Durch eine induktive Abstandsmessung lassen sich Abstandsänderungen im genannten Anwendungsfall besonders genau messen, so dass dieses Messprinzip bevorzugt zum Einsatz kommt.

Insbesondere bei Anwendung eines induktiven Messverfahrens ist es vorteilhaft, dass der Oberflächenabschnitt der Gelenkkugel, welcher von dem Abstandssensor erfasst wird, metallisch ist. Eine induktive Abstandsmessung lässt sich damit besonders zuverlässig durchführen, wobei es sich bei dem Oberflächenabschnitt auch um eine metallische Beschichtung, bevorzugt aus Kupfer handeln kann. Es ist somit auch denkbar, die Gelenkkugel aus einem nicht metallischen Werkstoff, beispielsweise aus Kunststoff, herzustellen und an dem dem Abstandssensor zugewandten Oberflächenabschnitt eine metallische Beschichtung vorzusehen. Letztere Ausführung kann vorteilhaft im Leichtbau zur Anwendung kommen.

Eine vorteilhafte Ausgestaltung des Kugelgelenks sieht vor, dass der Einrichtung eine Auswerteeinheit zugeordnet ist, die betreibbar ist, aus einem von dem wenigstens einen Abstandssensor erfassten Abstand eine Relativposition der Gelenkkugel gegenüber dem Gehäuse zu bestimmen.

Für bestimmte Anwendungsfälle kann es zweckmäßig sein, ein Kugelgelenk mit einem Winkelsensor auszustatten, mit welchem sich ein Kippwinkel des Kugelzapfens gegenüber dem Gehäuse bestimmen lässt. Derartige Kugelgelenke können beispielsweise Bestandteil einer sogenannten Höhenstandssensorik sein, die unter anderem zur Niveauregulierung von Fahrzeugscheinwerfern genutzt werden kann. Gemäß einer konstruktiv vorteilhaften Weiterbildung des Kugelgelenks weist die Gelenkkugel einen abgeflachten Bereich auf, wobei der wenigstens eine Abstandssensor an einer dem abgeflachten Bereich gegenüberliegenden Wandung des Gehäuses angeordnet ist, um einen Abstand gegenüber dem abgeflachten Bereich zu erfassen. In einer Ausgestaltung des Kugelgelenks erstreckt sich der abgeflachte Bereich im Wesentlichen orthogonal zu der axialen Richtung des Kugelzapfens. Der wenigstens eine Abstandssensor erfasst stets den Abstand zwischen dem Abstandssensor und dem abgeflachten Bereich. Wenn der Kugelzapfen mit der Gelenkkugel gegenüber dem Gehäuse verschwenkt wird, kippt dieser abgeflachte Bereich entsprechend der Schwenkrichtung, so dass sich dementsprechend auch die Entfernung zwischen dem Abstandssensor und dem abgeflachten Bereich ändert. Vorzugsweise bildet der abgeflachte Bereich eine gerade Ebene, so dass sich die Beziehung zwischen dem Abstand und dem Kippwinkel des Kugelzapfens mit einer verhältnismäßig einfachen mathematischen Formel beschreiben lässt. Zur einfachen Herstellung des Kugelgelenks bildet der abgeflachte Bereich vorteilhaft eine kreisförmige Fläche.

Damit sich die Relativposition der Gelenkkugel gegenüber dem Gehäuse eindeutig und insbesondere unabhängig von dem Kippwinkel des Kugelzapfens gegenüber dem Gehäuse ermitteln lässt, weist die Einrichtung vorteilhaft mehrere, vorzugsweise nebeneinander angeordnete Abstandssensoren auf, wobei die Auswerteeinheit betreibbar ist, aus von den Abstandssensoren erfassten Abständen eine Relativposition der Gelenkkugel gegenüber dem Gehäuse zu bestimmen.

Vorteilhaft ist die Auswerteeinheit weiterhin betreibbar, aus von den Abstandssensoren erfassten Abständen einen Kippwinkel des Kugelzapfens gegenüber dem Gehäuse zu bestimmen. Die mehreren Abstandssensoren sowie die Auswerteeinheit lassen sich somit vorteilhaft zu mehreren Zwecken nutzen, einerseits zur Bestimmung eines Kippwinkels des Kugelzapfens im Sinne eines Winkelsensors und zugleich zur Bestimmung der Relativposition der Gelenkkugel gegenüber dem Gehäuse, um daraus auf den Verschleißzustand des Gelenks zu schließen.

Ganz allgemein ist vorteilhaft die Auswerteeinheit betreibbar, aus der Relativposition der Gelenkkugel gegenüber dem Gehäuse den Verschleißzustand des Kugelgelenks abzuleiten. Dies kann im einfachsten Fall durch bloßen Vergleich zwischen aktueller und ursprünglicher Relativposition der Gelenkkugel gegenüber dem Gehäuse erfolgen, wobei eine zunehmende Abweichung von der ursprünglichen Relativposition mit einem zunehmenden Verschleiß des Kugelgelenks korrespondiert.

Dem Kugelgelenk ist zumindest ein weiterer Sensor zur Erfassung eines weiteren mechanischen Zustands des Kugelgelenks zugeordnet, wobei die Auswerteeinheit betreibbar ist, die von diesem zumindest einen weiteren Sensor erfasste Zustandsinformation bei der Ableitung des Verschleißzustands zu berücksichtigen. Bei diesem weiteren Sensor handelt es sich um einen Sensor zur Erfassung von Bauteilschwingungen (Vibrationen, Eigenfrequenzen) oder Beschleunigungen (beispielsweise des Kugelgelenks, des Gehäuses des Kugelgelenks, des Kugelzapfens).

Die Erfindung wird nachfolgend anhand einer Zeichnung näher erläutert und beschrieben. Aus den nachfolgend beschriebenen zwei Ausführungsbeispielen gehen die Funktionsweise und weitere vorteilhafte Effekte der Erfindung näher hervor. In der Zeichnung zeigt:
- Figur 1: ein Kugelgelenk gemäß einem ersten Ausführungsbeispiel in Schnittdarstellung,
- Figur 2: ein Kugelgelenk gemäß einem zweiten Ausführungsbeispiel in Schnittdarstellung,
- Figur 3: eine graphische Darstellung der Beziehung zwischen Abstand und Kippwinkel des in Figur 2 gezeigten Kugelgelenks.

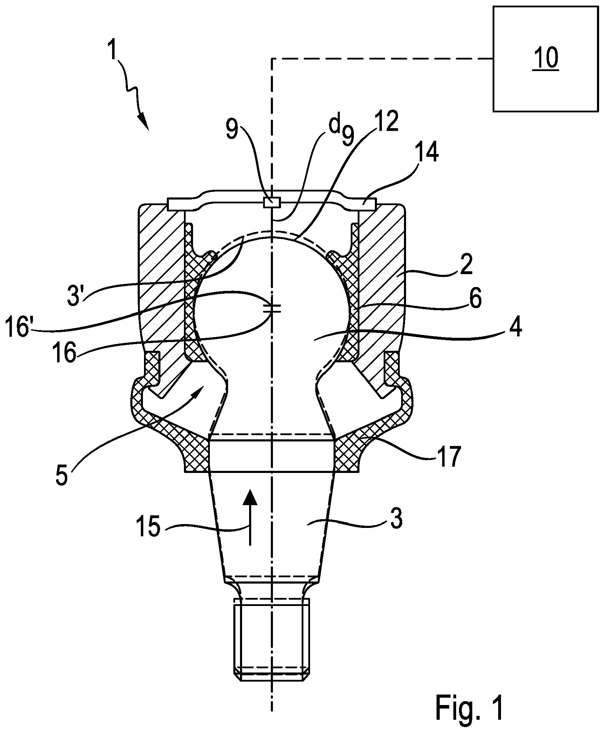

Figur 1 zeigt ein Kugelgelenk 1 gemäß einem ersten Ausführungsbeispiel der Erfindung in einer vereinfachten Schnittdarstellung. Bei dem Kugelgelenk 1 handelt es sich um ein Kugelgelenk, das beispielsweise zur gelenkigen Verbindung zweier Fahrwerkskomponenten eines Fahrzeugs dient. Das Kugelgelenk 1 umfasst im Wesentlichen ein Gehäuse 2 sowie einen darin gelenkig aufgenommenen Kugelzapfen 3. Der Kugelzapfen 3 weist an seinem dem Gehäuse 2 zugewandten Ende eine Gelenkkugel 4 auf, um mittels der Gelenkkugel 4 schwenkbeweglich gegenüber dem Gehäuse 2 gelagert zu sein. In einer dem Gehäuse 2 abgewandten axialen Richtung erstreckt sich der Kugelzapfen 3 durch eine Öffnung 5 des Gehäuses 2 hinaus. Innerhalb des Gehäuses 2 ist eine aus Kunststoff gefertigte Kugelschale 6 angeordnet, welche die Gelenkkugel 4 in einem Umfangsbereich umgibt, um diese gleitbeweglich zu lagern. Die Gelenkkugel 4 und somit der Kugelzapfen 3 steht somit in gleitbeweglichem Kontakt mit der Kugelschale 6, welche wiederum in dem Gehäuse 2 angeordnet ist. Im gezeigten Ausführungsbeispiel ist das Gehäuse 2 auf der dem Kugelzapfen 3 abgewandten Seite mit einem Gehäusedeckel 14 verschlossen. Zum Schutz der Öffnung 5 des Kugelgelenks 1 dient ein Dichtungsbalg 17, der mit einem Ende am Gehäuse 2 und mit einem gegenüberliegenden Ende am Kugelzapfen 3 anliegt, um ein Eindringen von Verunreinigungen in den Funktionsbereich des Gelenks zu verhindern.

Im ursprünglichen Zustand des Kugelgelenks 1 befindet sich der Kugelzapfen 3 in einer ursprünglichen Relativposition gegenüber dem Gehäuse 2. Diese ursprüngliche Relativposition ist in Figur 1 durch die Darstellung des Kugelzapfens 3 mit Volllinien dargestellt. Die Gelenkkugel 4 befindet sich demnach in einer Relativposition gegenüber dem Gehäuse 2, welche sich durch den Kugelmittelpunkt 16 angeben lässt. Der Kugelmittelpunkt 16 bildet somit das Rotationszentrum des Kugelzapfens 3, das heißt der Kugelzapfen 3 ist gegenüber dem Gehäuse 2 um den Kugelmittelpunkt 16 schwenkbeweglich.

Das Kugelgelenk 1 gemäß dem in Figur 1 dargestellten Ausführungsbeispiel ist mit einem Abstandssensor 9 ausgestattet, der in einem mittigen Bereich des Gehäusedeckels 14 angeordnet ist. Es handelt sich bei dem Abstandssensor 9 um einen auf Basis eines induktiven Messverfahrens arbeitenden Abstandssensor zur Erfassung eines Abstands d₉ der Gelenkkugel 4 gegenüber dem Gehäuse 2. Aufgrund der Beschaffenheit der Gelenkkugel 4 aus einem metallischen Material wie beispielsweise Stahl erfasst der induktiv arbeitende Abstandssensor 9 den Abstand d₉ gegenüber einem dem Abstandssensor 9 zugewandten Oberflächenabschnitt 12 der Gelenkkugel 4. Da der Oberflächenabschnitt 12 der Gelenkkugel 4 sphärisch ausgebildet ist, ist der erfasste Abstand d₉ unabhängig von einem Kippwinkel des Kugelzapfens 3 um den Kugelmittelpunkt 16.

Der Abstandssensor 9 ist über eine Signalleitung mit einer Auswerteeinheit 10 verbunden. Anhand eines von dem Abstandssensor 9 erzeugten Messsignals, welches mit dem erfassten Abstand d₉ korrespondiert, kann die Auswerteeinheit 10 eine Relativposition der Gelenkkugel 4 gegenüber dem Gehäuse 2 bestimmen. Mit der gezeigten Anordnung lässt sich somit eine Veränderung der Relativposition der Gelenkkugel 4 in axialer Richtung feststellen.

Im bestimmungsgemäßen Einsatz des Kugelgelenks 1 wirken zwischen Gehäuse 2 und Kugelzapfen 3 immer wieder unterschiedliche Betriebskräfte. Eine typischerweise auf den Kugelzapfen 3 wirkende Kraft 15 ist durch einen in Axialrichtung wirkenden Pfeil angedeutet. Wirkt eine solche Kraft 15 über längere Zeitdauer und gegebenenfalls gepaart mit starker Reibung aufgrund von Schwenkbewegungen gegenüber dem Gehäuse 2 auf die Kugelschale 6 ein, so tritt Verschleiß auf. Der Kugelzapfen wird dabei beispielsweise in Richtung der Kraft 15 leicht versetzt, und nimmt dann die Position des Kugelzapfens 3' ein, in der Zeichnung angedeutet durch die gestrichelte Linie. Der auf diese Weise axial versetzte Kugelzapfen 3' weist einen ebenfalls versetzten Kugelmittelpunkt 16' auf. Aufgrund des Versatzes befindet sich der dem Abstandssensor 9 zugewandte Oberflächenabschnitt der Gelenkkugel nun näher an dem dem Gehäuse 2 zugeordneten Abstandssensor 9, somit wird ein gegenüber dem Ursprungszustand verringerter Abstand gemessen. Die Auswerteeinheit 10, welche das Messsignal des Abstandssensors 9 während des Betriebs laufend empfängt, kann aus dem erfassten Abstand d₉ die Relativposition der Gelenckugel gegenüber dem Gehäuse 2 - zumindest in axialer Richtung - bestimmen. Die Auswerteeinheit 10 ist betreibbar, aus der laufend ermittelten Relativposition der Gelenkkugel 4 gegenüber dem Gehäuse 2 den Verschleißzustand des Kugelgelenks 1 abzuleiten. Vorteilhaft an dem gezeigten Ausführungsbeispiel ist, dass sich der Verschleißzustand des Kugelgelenks 1 mittels eines einzigen Abstandssensors 9 ermitteln lässt.

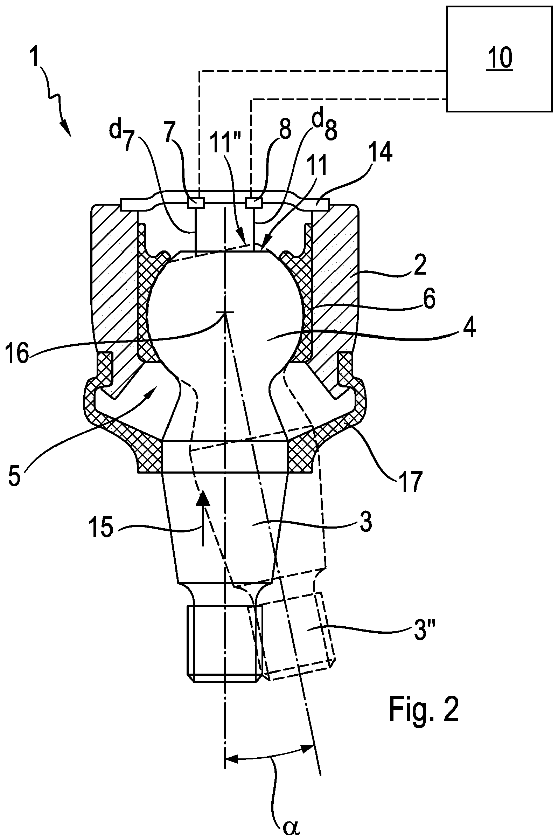

Figur 2 zeigt ein zweites Ausführungsbeispiel eines erfindungsgemäßen Kugelgelenks 1. Das Kugelgelenk 1 gemäß dem zweiten Ausführungsbeispiel entspricht in seinem mechanischen Aufbau im Wesentlichen dem Kugelgelenk 1 gemäß dem ersten Ausführungsbeispiel. Zur Vermeidung von Wiederholungen sei daher auf die dortigen Ausführungen verwiesen. Im Folgenden werden insbesondere davon abweichende Gestaltungsmerkmale sowie deren Wirkung beschrieben.

Das in Figur 2 gezeigte Kugelgelenk 1 gemäß dem zweiten Ausführungsbeispiel unterscheidet sich von dem Kugelgelenk gemäß dem ersten Ausführungsbeispiel im Wesentlichen dadurch, dass sich durch eine Anordnung mehrerer Abstandssensoren sowie eine veränderte Geometrie der Gelenkkugel nicht nur der Verschleißzustand des Kugelgelenks, sondern auch ein Kippwinkel des Kugelzapfens gegenüber dem Gehäuse (Winkelsensor) bestimmen lässt. Zu diesem Zweck weist bei dem Kugelgelenk 1 gemäß dem zweiten Ausführungsbeispiel die Gelenkkugel 4 an der dem Gehäuse 2 zugewandten Seite des Kugelzapfens 3 einen abgeflachten Bereich 11 auf. Der abgeflachte Bereich 11 erstreckt sich orthogonal zur Axialrichtung des Kugelzapfens 3 und bildet dabei eine gerade Ebene mit kreisförmiger Erstreckung aus.

Am Gehäusedeckel 14 sind nun zwei Abstandssensoren 7, 8 mit gleichem Abstand von der gestrichelt dargestellten Gelenkachse nebeneinander angeordnet. Der Abstandssensor 7 erfasst einen Abstand d₇ gegenüber dem abgeflachten Bereich 11, während der Abstandssensor 8 einen Abstand d₈ gegenüber dem abgeflachten Bereich 11 erfasst. Führt der Kugelzapfen 3 betriebsbedingt eine Schwenkbewegung um den Kugelmittelpunkt 16 durch, so wird der abgeflachte Bereich 11 entsprechend mitgeschwenkt. Bei einer Schwenkbewegung gegenüber der in Volllinien dargestellten Nulllage des Kugelzapfens 3 gegen den Uhrzeigersinn um den Winkel α befindet sich der Kugelzapfen 3" anschließend in einer entsprechend gedrehten Lage, angedeutet durch die gestrichelte Linie. Der abgeflachte Bereich 11" ist ebenfalls entsprechend gegenüber der Ursprungslage gedreht.

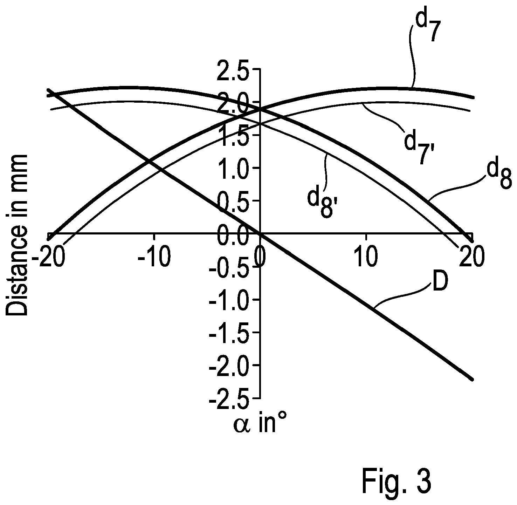

Die bei einer Schwenkbewegung des Kugelzapfens 3 des in Figur 2 dargestellten Kugelgelenks 1 auftretenden Messsignale der Abstandssensoren 7, 8 sind in Figur 3 dargestellt. Demnach besteht eine funktionale Beziehung zwischen den Entfernungen d₇ beziehungsweise d₈ und dem Kippwinkel a. Aus dieser funktionalen Beziehung ist über einen vorgegebenen Bewegungsfreiraum (zwischen -α und +α) des Kugelzapfens 3 eine eindeutige Zuordnung zwischen Abstand d₇, d₈ und dem Kippwinkel α möglich. Mit dem Einsatz von zwei Sensoren 7, 8, wie in Figur 2 gezeigt, ist es möglich, den gesamten Bewegungsbereich (-a bis +a) mit eindeutigen funktionalen Beziehungen abzudecken. Wie Figur 3 zeigt, ist es weiterhin möglich, aus den Abstandssignalen d₇ und d₈ eine lineare Beziehung abzuleiten. Dies lässt sich durchführen, indem die mit dem einen Abstandssensor 7 erfasste Entfernung d₇ von dem mit dem Abstandssensor 8 erfassten Abstand d₈ subtrahiert wird. Im Ergebnis ergibt sich dabei eine lineare, funktionale Beziehung zwischen den Abstandsmesswerten d₇, d₈ und dem Kippwinkel a, in Figur 3 dargestellt durch die Gerade D.

Zugleich ist die Auswerteeinheit 10 des Kugelgelenks 1 gemäß dem zweiten Ausführungsbeispiel betreibbar, aus den von den Abstandssensoren 7, 8 erfassten Abständen d₇, d₈ eine Relativposition der Gelenkkugel 4 gegenüber dem Gehäuse 2 zu bestimmen. Denn auch bei dem in Figur 2 gezeigten Kugelgelenk 1 kann aufgrund einer dauerhaften Krafteinwirkung beziehungsweise allgemeiner betrieblicher Belastung ein Verschleiß einsetzen, der wie bei dem in Figur 1 gezeigten Kugelgelenk zu einer Veränderung der Position der Gelenkkugel 4 relativ zum Gehäuse 2 führt. Eine solche verschleißbedingte Positionsveränderung würde dazu führen, dass sich die mit den Abstandssensoren 7, 8 erfassten Abstände - bei gleichem Kippwinkel α des Kugelzapfens - verkürzen auf die Abstände d_{7'} und d_{8'}. In der Figur 3 ist dies durch die jeweils nach unten verschobenen Abstandsverläufe d_{7'} beziehungsweise d_{8'} dargestellt.

Bei den zuvor beschriebenen Ausführungsbeispielen von Kugelgelenken erfolgt die Ermittlung des Verschleißzustands auf Basis der Beobachtung der Relativposition der Gelenkkugel, wozu eine Abstandsmessung durchgeführt wird. Mit Hilfe eines oder mehrerer weiterer Sensoren werden weitere mechanische Zustände des Kugelgelenks erfasst, und die Auswerteeinheit ist betreibbar, neben der Relativposition der Gelenkkugel auch diese weiteren Zustandsinformationen bei der Ableitung des Verschleißzustandes zu berücksichtigen.

### Bezugszeichen

- 1: Kugelgelenk
- 2: Gehäuse
- 3: Kugelzapfen
- 4: Gelenkkugel
- 5: Öffnung
- 6: Kugelschale
- 7: Abstandssensor
- 8: Abstandsensor
- 9: Abstandssensor
- 10: Auswerteeinheit
- 11: abgeflachter Bereich
- 12: Kugeloberfläche
- 13: Dichtungsbalg
- 14: Gehäusedeckel
- 15: Kraft
- 16: Kugelmittelpunkt
- 3': Kugelzapfen (versetzt)
- 3": Kugelzapfen (ausgelenkt)
- 11": abgeflachter Bereich (ausgelenkt)

- d₇, d_{7'}: Abstand
- d₈, d_{8'}: Abstand
- d₉: Abstand
- D: Differenz
- α: Schwenkwinkel

## Patentansprüche

1. Kugelgelenk (1), insbesondere für ein Fahrzeug, umfassend ein Gehäuse (2) und einen eine Gelenkkugel (4) aufweisenden Kugelzapfen (3), der mittels der Gelenkkugel (4) schwenkbeweglich in dem Gehäuse (2) gelagert ist und sich durch eine Öffnung (5) des Gehäuses (2) hinaus erstreckt, wobei sich mittels einer Einrichtung (7, 8, 9, 10) eine Relativposition der Gelenkkugel (4) gegenüber dem Gehäuse (2) bestimmen lässt, um aus der Relativposition einen Verschleißzustand des Kugelgelenks (1) abzuleiten, die Einrichtung umfasst wenigstens einen Abstandssensor (7, 8, 9) zur Erfassung eines Abstands (d₇, d₈, d₉) der Gelenkkugel (4) gegenüber dem Gehäuse (2), wobei der wenigstens eine Abstandssensor (7, 8, 9) dazu ausgebildet ist, einen Abstand (d₇, d₈, d₉) zwischen dem Gehäuse (2) und einem dem Abstandssensor (7, 8, 9) zugewandten Oberflächenabschnitt (11, 12) der Gelenkkugel (4) zu erfassen, und der wenigstens eine Abstandssensor (7, 8, 9) auf Basis eines induktiven und/oder kapazitiven und/oder optischen Messverfahrens arbeitet, **dadurch gekennzeichnet, dass** diesem zumindest ein weiterer Sensor zur Erfassung eines weiteren mechanischen Zustands des Kugelgelenks (1) zugeordnet ist, wobei die Auswerteeinheit (10) betreibbar ist, die von diesem zumindest einen weiteren Sensor erfasste Zustandsinformation bei der Ableitung des Verschleißzustandes zu berücksichtigen und der Sensor zur Erfassung von Bauteilschwingungen oder Beschleunigungen ausgebildet ist.

2. Kugelgelenk nach Anspruch 1, **dadurch gekennzeichnet, dass** in dem Gehäuse (2) eine die Gelenkkugel (4) bereichsweise umgebende Kugelschale (6) angeordnet ist, welche die Gelenkkugel (4) gleitbeweglich lagert.

3. Kugelgelenk nach einem der vorhergehenden Ansprüche, **dadurch gekennzeichnet, dass** der Oberflächenabschnitt (11, 12) metallisch ist.

4. Kugelgelenk nach einem der vorhergehenden Ansprüche, **dadurch gekennzeichnet, dass** die Einrichtung eine Auswerteeinheit (10) umfasst, die betreibbar ist, aus einem von dem wenigstens einen Abstandssensor (7, 8, 9) erfassten Abstand (d₇, d₈, d₉) eine Relativposition der Gelenkkugel (4) gegenüber dem Gehäuse (2) zu bestimmen.

5. Kugelgelenk nach einem der vorhergehenden Ansprüche, **dadurch gekennzeichnet, dass** die Gelenkkugel (4) einen abgeflachten Bereich (11) aufweist, wobei der wenigstens eine Abstandssensor (7, 8) an einer dem abgeflachten Bereich (11) gegenüberliegenden Wandung (12) des Gehäuses (2) angeordnet ist, um einen Abstand (d₇, d₈) gegenüber dem abgeflachten Bereich (11) zu erfassen.

6. Kugelgelenk nach einem der vorhergehenden Ansprüche, **dadurch gekennzeichnet, dass** die Einrichtung mehrere vorzugsweise nebeneinander angeordnete Abstandssensoren (7, 8) umfasst, wobei die Auswerteeinheit (10) betreibbar ist, aus von den Abstandssensoren (7, 8) erfassten Abständen (d₇, d₈) eine Relativposition der Gelenkkugel (4) gegenüber dem Gehäuse (2) zu bestimmen.

7. Kugelgelenk nach Anspruch 6, **dadurch gekennzeichnet, dass** die Auswerteeinheit (10) betreibbar ist, aus von den Abstandssensoren (7, 8) erfassten Abständen (d₇, d₈) einen Kippwinkel (α) des Kugelzapfens (3) gegenüber dem Gehäuse (2) zu bestimmen.

8. Kugelgelenk nach einem der vorigen Ansprüche, **dadurch gekennzeichnet, dass** die Auswerteeinheit (10) betreibbar ist, aus der Relativposition der Gelenckugel (4) gegenüber dem Gehäuse (2) den Verschleißzustand des Gelenks (1) abzuleiten.

## Claims

1. Ball joint (1), in particular for a vehicle, comprising a housing (2) and a ball pivot (3) which has a joint ball (4), is mounted in the housing (2) such that it can be moved pivotably by means of the joint ball (4), and extends through and beyond an opening (5) of the housing (2), it being possible for a relative position of the joint ball (4) with respect to the housing (2) to be determined by means of a device (7, 8, 9, 10), in order to derive a wear state of the ball joint (1) from the relative position, the device comprises at least one distance sensor (7, 8, 9) for the detection of a spacing (d₇, d₈, d₉) of the joint ball (4) with respect to the housing (2), the at least one distance sensor (7, 8, 9) being configured to detect a spacing (d₇, d₈, d₉) between the housing (2) and a surface section (11, 12) of the joint ball (4), which surface section (11, 12) faces the distance sensor (7, 8, 9), and the at least one distance sensor (7, 8, 9) operating on the basis of an inductive and/or capacitive and/or optical measuring method, **characterized in that** the said ball joint (1) is assigned at least one further sensor for the detection of a further mechanical state of the ball joint (1), it being possible for the evaluation unit (10) to be operated so as to consider the state information which is detected by the said at least one further sensor during the derivation of the wear state, and the sensor being configured for the detection of component vibrations or accelerations.

2. Ball joint according to Claim 1, **characterized in that** a ball shell (6) which surrounds the joint ball (4) in regions and mounts the joint ball (4) such that it can be moved in a sliding manner is arranged in the housing (2) .

3. Ball joint according to either of the preceding claims, **characterized in that** the surface section (11, 12) is metallic.

4. Ball joint according to one of the preceding claims, **characterized in that** the device comprises an evaluation unit (10) which can be operated so as to determine a relative position of the joint ball (4) with respect to the housing (2) from a spacing (d₇, d₈, d₉) which is detected by the at least one distance sensor (7, 8, 9).

5. Ball joint according to at least one of the preceding claims, **characterized in that** the joint ball (4) has a flattened region (11), the at least one distance sensor (7, 8) being arranged on a wall (12) of the housing (2), which wall (12) lies opposite the flattened region (11), in order to detect a spacing (d₇, d₈) with respect to the flattened region (11).

6. Ball joint according to one of the preceding claims, **characterized in that** the device comprises a plurality of distance sensors (7, 8) which are preferably arranged next to one another, it being possible for the evaluation unit (10) to be operated so as to determine a relative position of the joint ball (4) with respect to the housing (2) from spacings (d₇, d₈) which are detected by the distance sensors (7, 8).

7. Ball joint according to Claim 6, **characterized in that** the evaluation unit (10) can be operated so as to determine a tilting angle (α) of the ball pivot (3) with respect to the housing (2) from spacings (d₇, d₈) which are detected by the distance sensors (7, 8).

8. Ball joint according to one of the preceding claims, **characterized in that** the evaluation unit (10) can be operated so as to derive the wear state of the joint (1) from the relative position of the joint ball (4) with respect to the housing (2).

## Revendications

1. Articulation à rotule (1), notamment pour un véhicule, comprenant un boîtier (2) et un pivot à rotule (3) qui possède une rotule d'articulation (4), lequel est monté dans le boîtier (2) en mobilité de pivotement au moyen de la rotule d'articulation (4) et s'étend à travers une ouverture (5) du boîtier (2), une position relative de la rotule d'articulation (4) par rapport au boîtier (2) pouvant être déterminée au moyen d'un dispositif (7, 8, 9, 10) afin de dériver un état d'usure de l'articulation à rotule (1) à partir de la position relative, le dispositif comprenant au moins un détecteur d'écart (7, 8, 9) destiné à détecter un écart (d₇, d₈, d₉) de la rotule d'articulation (4) par rapport au boîtier (2), l'au moins un détecteur d'écart (7, 8, 9) étant configuré pour détecter un écart (d₇, d₈, d₉) entre le boîtier (2) et une portion de surface (11, 12) de la rotule d'articulation (4) qui fait face au détecteur d'écart (7, 8, 9), et l'au moins un détecteur d'écart (7, 8, 9) fonctionnant sur la base d'un procédé de mesure inductif et/ou capacitif et/ou optique, **caractérisée en ce qu'**à celle-ci est associé au moins un détecteur supplémentaire destiné à détecter un état mécanique supplémentaire de l'articulation à rotule (1), l'unité d'interprétation (10) pouvant être utilisée pour tenir compte des informations d'état détectées par cet au moins un détecteur supplémentaire lors de la dérivée de l'état d'usure et le détecteur étant configuré pour détecter des oscillations d'élément structural ou des accélérations.

2. Articulation à rotule selon la revendication 1, **caractérisée en ce qu'**une coque de rotule (6) qui entoure la rotule d'articulation (4) dans certaines zones est disposée dans le boîtier (2), laquelle supporte la rotule d'articulation (4) en mobilité de glissement.

3. Articulation à rotule selon l'une des revendications précédentes, **caractérisée en ce que** la portion de surface (11, 12) est métallique.

4. Articulation à rotule selon l'une des revendications précédentes, **caractérisée en ce que** le dispositif comporte une unité d'interprétation (10) qui peut être utilisée pour déterminer une position relative de la rotule d'articulation (4) par rapport au boîtier (2) à partir d'un écart (d₇, d₈, d₉) détecté par l'au moins un détecteur d'écart (7, 8, 9).

5. Articulation à rotule selon l'une des revendications précédentes, **caractérisée en ce que** la rotule d'articulation (4) possède une zone aplatie (11), l'au moins un détecteur d'écart (7, 8) étant disposé au niveau d'une paroi (12) du boîtier (2) qui se trouve à l'opposé de la zone aplatie (11) afin de détecter un écart (d₇, d₈) par rapport à la zone aplatie (11).

6. Articulation à rotule selon l'une des revendications précédentes, **caractérisée en ce que** le dispositif comporte plusieurs détecteurs d'écart (7, 8) de préférence disposés les uns à côté des autres, l'unité d'interprétation (10) pouvant être utilisée pour déterminer une position relative de la rotule d'articulation (4) par rapport au boîtier (2) à partir des écarts (d₇, d₈) détectés par les détecteurs d'écart (7, 8).

7. Articulation à rotule selon la revendication 6, **caractérisée en ce que** l'unité d'interprétation (10) peut être utilisée pour déterminer un angle de basculement (α) de la rotule d'articulation (3) par rapport au boîtier (2) à partir des écarts (d₇, d₈) détectés par les détecteurs d'écart (7, 8).

8. Articulation à rotule selon l'une des revendications précédentes, **caractérisée en ce que** l'unité d'interprétation (10) peut être utilisée pour dériver l'état d'usure de l'articulation (1) à partir de la position relative de la rotule d'articulation (4) par rapport au boîtier (2).
